# EUROPEAN PATENT SPECIFICATION

(11) **EP 0 580 258 B1**
(45) Date of publication and mention of the grant of the patent: **29.01.1997**
(21) Application number: 93202160.3
(22) Date of filing: 13.07.1993
(51) Int. Cl.: B29D 17/00, B29C 45/40

(54) **Injection-moulding apparatus and mould for use in the injection-moulding apparatus**
Spritzgussvorrichtung sowie Matrize zum Gebrauch in der Spritzgussvorrichtung
Dispositif de moulage par injection et moule convenant pour être utilisé dans ce dispositif

(30) Priority: 20.07.1992 EP 92202203
(43) Date of publication of application: 26.01.1994
(73) Proprietor: Philips Electronics N.V., 5621 BA Eindhoven (NL)
(72) Inventor: Snoeyen, Anthonius Johannes Hendrikus, NL-5656 AA Eindhoven (NL)
(74) Representative: Cuppens, Hubertus Martinus Maria

(56) References cited:
- EP-A- 0 361 406
- DE-A- 3 435 856
- US-A- 4 979 891

## Description

The invention relates to an injection-moulding apparatus comprising a mould having a first and a second mould section, which mould sections are movable relative to one another between a first position, in which both mould sections are in contact with one another and define a cavity for moulding a product, and a second position, in which the mould sections are spaced apart to allow removal of the moulded product, the second mould section having a bounding surface at a side remote from the first mould section, with which bounding surface the second mould section is in contact with a base, and a movable punch being situated inside the second mould section, which injection-moulding apparatus further comprises means for moving the punch. Such an apparatus is used *inter alia* for the manufacture of optical information carriers such as, for example, Compact Discs. These are round discs having a centre hole. This hole is formed by the punch.

An injection-moulding apparatus of the type defined in the opening sentence is known from US 4,185,955. The second mould section of said apparatus comprises the means for moving the punch. These means comprise a pneumatic cylinder in which piston is arranged to reciprocate a plate to which the punch has been secured. This cylinder is connected to a pneumatic control system *via* lines. If by means of this injection-moulding apparatus a product is to be manufactured which differs from the previously manufactured product the second mould section must be converted. For this purpose the mould section has to be removed from the injection-moulding apparatus in view of the space necessary for conversion. With the prior-art injection-moulding apparatus this is laborious and time-consuming because it is also necessary to disconnect pneumatic supply and discharge lines and because auxiliary devices, for example a hoist, have to be used since the mould section is heavy. This is an expensive operation because production is held up during the conversion. Since manufacturers wish to minimise stocks and wish to offer products in small series the demand for small batches of a product increases. This leads to an increased conversion time in proportion to the production time, resulting in a rise of the product costs.

It is an object of the invention to provide an injection-moulding apparatus of the type defined in the opening sentence, enabling the conversion of the mould to be effected more rapidly. For this purpose the injection-moulding apparatus in accordance with the invention is defined in claim 1.

An injection-moulding apparatus in accordance with the invention is characterised in that at the location of the bounding surface the punch is divided into a first part situated in the second mould section and a second part situated in the base. Both parts of the punch are in contact with one another but are not connected to one another. This reduces the number of connections to be detached for removing the mould section. Since the punch is divided at the location of the bounding surface the mould section can be removed from the injection-moulding apparatus by moving the mould section only in the plane of the bounding surface. It is not necessary to move the mould section also in a direction perpendicular to the bounding surface. This is advantageous in view of the time required for removing and replacing the mould section.

An embodiment of the injection-moulding apparatus in accordance with the invention is characterised in that inside the second mould section there has also been provided an ejector for ejecting a sprue from the punch and the injection-moulding apparatus comprises further means for moving the ejector, the base having been provided with the further means, situated externally of the mould, for moving the ejector. If further moving parts are situated inside the mould, for example an ejector, it is advantageous that the further means for moving said further moving parts are also situated outside the mould in the base.

An advantageous embodiment of the injection-moulding apparatus in accordance with the invention is characterised in that the means for moving the punch comprise a movable piston situated in a cylindrical recess provided in the base. A further advantageous embodiment of the injection-moulding apparatus is characterised in that the further means for moving the ejector comprise a movable further piston situated in a further cylindrical recess provided in the piston for the purpose of moving the punch.

EP-A-0 361 406 discloses a mould in which the puncher is divided, however, the punch is not divided at the same location as in the present case. Consequently, the easy interchangeability is not obtained.

The invention will now be described in more detail, by way of example, with reference to the drawings. In the drawings:
Figure 1 shows an injection-moulding apparatus in accordance with the invention, and
Figure 2 is a sectional view of the mould sections and of a part of the base.

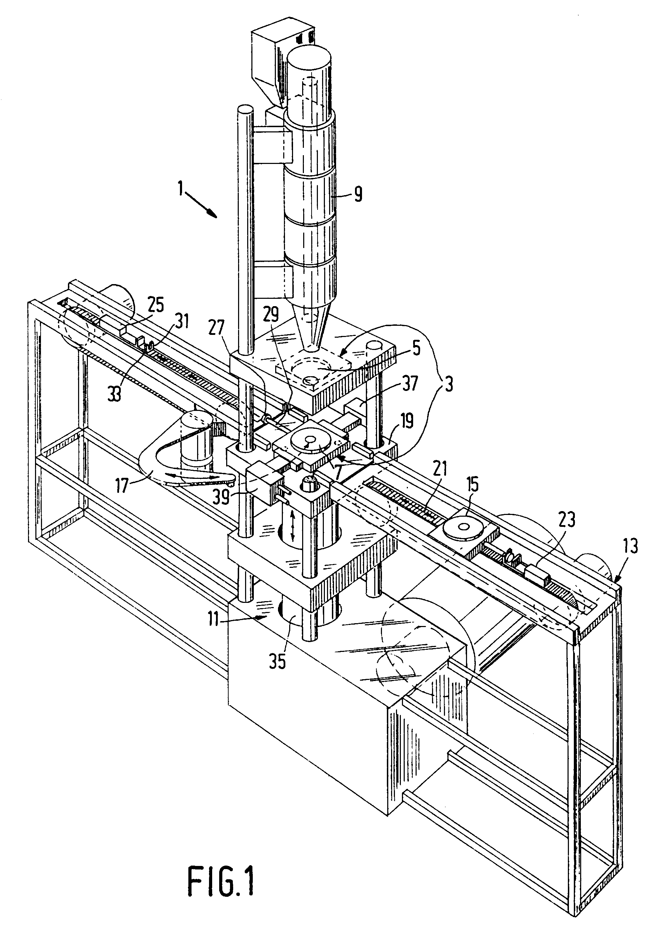

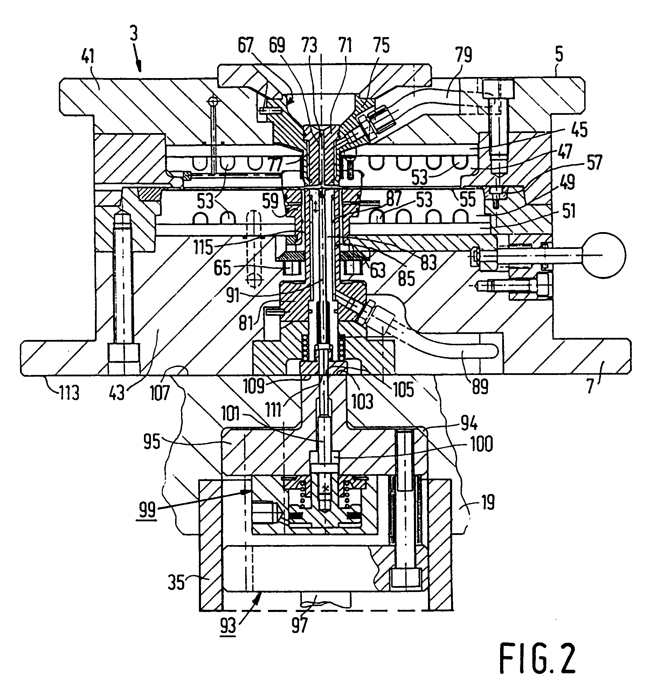

Figure 1 shows an injection-moulding apparatus 1 comprising a mould 3 having a first and a second mould section 5, 7 which are movable relative to one another, an injection-moulding unit 9 for feeding a molten synthetic material under pressure into the mould, a displacement unit 11 for moving the second mould section 7, and a transport device 13 for exchanging the second mould section 7 with a further mould section 15. The first and the second mould section 5, 7 are movable between a position in which the two mould sections are spaced apart (see Figure 1) and a position in which the two mould sections are in contact with one another, the two sections defiring a disc-shaped cavity in which an information carrier, for example a Compact Disc, can be formed (see Figure 2). The injection-moulding apparatus 1 further comprises a movable arm 17 for removing the moulded information carrier from the second mould section 7 when the two mould sections are spaced apart. To enable the second mould section 7 to be rapidly exchanged with the further mould section 15 the number of connections with a base 19 of the displacement unit 11, which carries the second mould section, should be as small as possible. The transport device 13 comprise a conveyor belt 21 carrying a plurality of coupling members 23, 25 which can be coupled to the second mould section 7 and the further mould section 15. This is effected by moving a coupling member 25 towards the second mould section 7 and lowering the second mould section, a disc 27, which is secured to the second mould section 7 by a rod 29, engaging behind two teeth 31, 33 of the coupling member 25. For this purpose the base 19 is arranged on a movable cylinder 35 of the displacement unit 11. Subsequently, the second mould section 7 is detached from the base 19 by loosening clamping units 37, 39. The conveyor belt 21 can now be driven to move the second mould section 7 away from the base 19 and at the same time position the further mould section 15 above the base 19.

Figure 2 shows the first and the second mould section 5, 7 and a part of the base 19. The mould sections each have a rear part 41, 43 on which two interconnected plates 45, 47, 49, 51 are arranged. One of the plates has grooves 53, which after interconnection of the two plates form cooling ducts for cooling the moulded information carrier. The plates are interconnected by soldering. In comparison with the customary bolting method, using O-rings for sealing the cooling ducts, soldering has the advantage that it also provides sealing of the cooling ducts and that the plates to be interconnected can be thinner because no material for screwthread has to be provided. The plate 49 of the second mould section 7 carries a shell 55, which is clamped in position by means of a clamping ring 57 and a clamping bush 59. This shell 55 has a profile representing information. This profile is formed in the product during moulding of a product. The plate 47 of the first mould section 5 facing the shell has a smooth surface because the product is provided with information at one side only. The clamping bush 59 is held in position by a slide 61 and can be removed from the second mould section 7 by pulling the slide 61 outward. This results in a dish 63, which is held in position against the load of a spring 65, being urged against the clamping bush 59 by the spring 65, so that the clamping bush is pushed out of the mould 3.

The first mould section 5 has a sprue bush 67 in which an injection duct 69 is formed. This sprue bush 67 comprises a cylinder 71 with a central bore 73. This cylinder is situated in a cylindrical hole in a housing 75 of the sprue bush 67 and has been soldered to the housing near its ends. A space 77 between the housing and the cylinder forms a cooling duct and is connected to a cooling system *via* a line 79. A movable punch 81 is arranged opposite the sprue bush 67 in the second mould section 7 to sever a sprue comprising a sprue slug and a stalk portion from the product, which sprue slug and stalk portion are situated between the punch 81 and the sprue bush 67 after the product has been formed. The punch 81 is formed by a cylinder 83 which near its ends has been soldered to a bush 85, a space 87 being present between the cylinder and the bush to form a cooling duct, which is connected to a cooling system *via* a line 89. The cylinder 83 has a central bore in which an ejector 91 is situated for ejecting the sprue slug with the stalk portion from the punch 81. When the sprue slug and the stalk portion are severed the sprue bush 67, which faces the punch 81, is not moved but the stalk portion is compressed between the sprue bush and the punch 81. This is possible because the distance over which the punch is moved, which distance is at least equal to the thickness of the connection between the stalk portion and the product, is substantially smaller than the thickness of the stalk portion.

The base 19 of the injection-moulding apparatus 1, which carries the second mould section 7, comprises means 93 for moving the punch 81. These means 93 comprise a piston 95 which is movable in a cylindrical recess 94 formed in the base. The piston 95 can be moved by means of a rod 97. This rod 97 is situated in the hollow cylinder 35. The punching movement performed by the means 93 is followed by the punch 81 present in the second mould section 7, thus enabling a sprue slug to be severed from an information carrier. The base 19 comprises further means 99 for realising an ejection movement. These further means 99 comprise a further piston 101, which is hydraulically or pneumatically movable. This further piston 101 is situated in a further cylindrical recess 100 formed the first-mentioned piston 95. Both pistons have an end face 103, 105 coinciding with a mounting surface 107 of the base 19 on which the second mould section 7 is disposed. The punch 81 and the ejector 91 also have end faces 109, 111 which coincide with a bounding surface 113 of the second mould section 7 and which are in contact with the end faces 103, 105 of the pistons 95, 101 of the base 19. Both the punch movement and the ejection movement are performed against spring force. The spring force provides the return movement of the punch and the ejector in the absence of the liquid or gas pressure.

Thus, the exchangeable second mould section 7 does not comprise any mechanisms for moving the punch and the ejector. These mechanisms 93, 99 are arranged in the base 19 and can be coupled simply to the punch 81 and the ejector 91 of the mould 3. Moreover, no mechanism has been provided for extracting the moulded information carrier from the second mould section 7 because this is effected exclusively by means of compressed air. In the known injection-moulding apparatus this is effected by lifting the information carrier from the shell by means of an ejection cylinder near the centre of the information carrier and at the same time blowing air between the information carrier and the shell *via* an air duct. The injection-moulding apparatus in accordance with the invention is constructed in such a manner that it suffices to blow air between the information carrier and the shell 55. This is effected *via* an air duct 115 formed between the clamping bush 59 and the punch 81. With the present construction the information carrier can be demoulded by means of compressed air because the distance over which the information carrier is to be moved to allow it to be gripped by the arm 17 is substantially smaller than with the prior-art moulds. This is possible because the clamping ring 57, which clamps the shell 55 onto the second mould section 7, only projects from the shell 55 over a distance equal to the thickness of the information carrier. The steps mentioned hereinbefore yield a simple mould section which can be exchanged rapidly with another mould section.

Although the invention has been described with reference to the drawings this does not imply that the invention is limited to the embodiment shown in the drawings. The invention likewise relates to all embodiments which deviate from those shown in the drawings within the scope defined by the Claims.

## Claims

1. An injection-moulding apparatus comprising a mould (3) having a first and a second mould section (5, 7), which mould sections are movable relative to one another between a first position, in which both mould sections are in contact with one another and define a cavity for moulding a product, and a second position, in which the mould sections are spaced apart to allow removal of the moulded product, the second mould section (7) having a bounding surface (113) at a side remote from the first mould section (5), with which bounding surface the second mould section is in contact with a base (19), and a movable punch (81) being situated inside the second mould section, which injection-moulding apparatus further comprises a means (93) for moving the punch, characterised in that the base (19) comprises the means (93), situated externally of the mould (3), for moving the punch (81), at the location of the bounding surface (113) of the second mould section the punch being divided into a part situated in the second mould section and another part situated in the base, the punch part situated in the second mould section having an end face (109) coinciding with the bounding face.

2. An injection-moulding apparatus as claimed in Claim 1, characterised in that inside the second mould section (7) there is provided an ejector (91) for ejecting a sprue from the punch (81), the injection-moulding apparatus comprising a further means (99) for moving the ejector, the base (19) comprising the further means, situated externally of the mould, for moving the ejector, at the location of the bounding surface (113) the ejector being divided into a part situated in the second mould section and another part situated in the base or the ejector having an end face (111) coinciding with the bounding face.

3. An injection-moulding apparatus as claimed in Claim 1 or 2, characterised in that the means (93) for moving the punch (81) comprises a movable piston (95) situated in a cylindrical recess (94) provided in the base (19).

4. An injection-moulding apparatus as claimed in Claim 3, characterised in that the further means (99) for moving the ejector (91) comprises a movable further piston (101) situated in a further cylindrical recess (100) provided in the piston (95) for the purpose of moving the punch (81).

## Patentansprüche

1. Spritzgußvorrichtung mit einer Matrize (3) mit einem ersten und einem zweiten Matrizenteil (5, 7), die gegenüber einander zwischen einer ersten Lage, in der die beiden Matrizenteile einander berühren und einen Hohlraum zum Bilden eines Körpers begrenzen, und einer zweiten Lage, in der die Matrizenteile sich in einem Abstand voneinander befinden zum Entfernen des gebildeten Körpers, beweglich sind, wobei der zweite Matrizenteil (7) auf einer von dem ersten Matrizenteil (5) abgewandten Seite mit einer Begrenzungsfläche (113) versehen ist, die der zweite Matrizenteil mit einem Träger (19) berührt, und wobei sich in dem zweiten Matrizenteil ein verlagerbarer Stempel (81) befindet, wobei diese Spritzgußvorrichtung weiterhin Mittel (93) aufweist zum Verlagern des Stempels, dadurch gekennzeichnet, daß der Träger (19) die Mittel (93) aufweist, die außerhalb der Matrize (3) vorgesehen sind, zum Verlagern des Stempels (81), wobei an der Stelle der Begrenzungsfläche (113) des zweiten Matrizenteils der Stempel geteilt ist in einen Teil, der sich in dem zweiten Matrizenteil befindet und einen zweiten Teil, der sich in dem Träger befindet, wobei der Stempelteil, der sich in dem zweiten Matrizenteil befindet, eine Endfläche (109) aufweist, die mit der Begrenzungsfläche zusammenfällt.

2. Spritzgußvorrichtung nach Anspruch 1, dadurch gekennzeichnet, daß sich in dem zweiten Matrizenteil (7) weiterhin ein Stoßer (91) befindet zum Ausstoßen eines Angußteils aus dem Stempel (81) und daß die Spritzgußvorrichtung weiterhin Mittel (99) aufweist zum Verlagern des Stoßers, wobei der Träger (19) mit den außerhalb der Matrize befindlichen Mitteln zum Verlagern des Stempels versehen ist, wobei an der Stelle der Begrenzungsfläche (113) der Stoßer in einen Teil innerhalb des zweiten Matrizenteils und einen anderen Teil aufgeteilt ist, der sich in dem Träger oder in dem Stoßer befindet und eine Endfläche (111) aufweist, die mit der Begrenzungsfläche zusammenfällt.

3. Spritzgußvorrichtung nach Anspruch 1 oder 2, dadurch gekennzeichnet, daß die Mittel (93) zum Verlagern des Stempels (81) einen verlagerbaren Kolben (95) umfassen, der sich in einer zylinderförmigen Ausnehmung (94) in dem Träger (19) befindet.

4. Spritzgußvorrichtung nach Anspruch 3, dadurch gekennzeichnet, daß die weiteren Mittel (99) zum Verlagern des Stoßers (91) einen verlagerbaren weiteren Kolben (101) umfassen, der sich in einer weiteren zylinderförmigen Ausnehmung (100) in dem Kolben (95) zum Verlagern des Stempels (81) befindet.

## Revendications

1. Dispositif de moulage par injection comprenant un moule (3) présentant des première et deuxième parties de moule (5, 7), lesquelles parties de moule peuvent être déplacées, l'une par rapport à l'autre, entre une première position, dans laquelle les deux parties des moules sont en contact, l'une avec l'autre, et définissent une cavité pour le moulage d'un produit, et une deuxième position, dans laquelle les parties de moule sont espacées pour permettre l'enlèvement du produit moulé, la deuxième partie de moule (7) présentant une surface de délimitation (113) située d'un côté s'écartant de la première partie de moule (5), surface de délimitation avec laquelle la deuxième partie de moule est en contact avec un support (19) et un poinçon mobile (81) étant situé dans la deuxième partie de moule, appareil de moulage par injection qui comprend en outre un moyen (93) servant à déplacer le poinçon, caractérisé en ce que le support (19) est muni de moyens (93) situés à l'extérieur du moule (3) pour le déplacement du poinçon (81) à l'endroit de la surface de délimitation (113) de la deuxième partie de moule, le poinçon étant divisé en une partie située dans la deuxième partie de moule et une autre partie située dans le support, la partie de poinçon située dans la deuxième partie de moule présentant une face terminale (109) qui coïncide avec la face de délimitation.

2. Appareil de moulage par injection selon la revendication 1, caractérisé en ce que dans la deuxième partie de moule (7) est prévu un éjecteur (91) pour éjecter une buse du poinçon (81), l'appareil de moulage par injection comprenant un autre moyen (99) pour déplacer l'éjecteur, le support (19) étant muni d'autres moyens situés à l'extérieur du moule pour le déplacement de l'éjecteur, à l'endroit de la surface de délimitation (113), l'éjecteur étant divisé en une partie située dans la deuxième partie de moule et une autre partie située dans le support ou l'éjecteur présentant une face terminale (11) coïncidant avec la face de délimitation.

3. Appareil de moulage par injection selon la revendication 1 ou 2, caractérisé en ce que le moyen (93) pour le déplacement du poinçon (81) comprend un piston mobile (95) situé dans un enfoncement cylindrique (94) prévu dans le support (19).

4. Appareil de moulage par injection selon la revendication 3, caractérisé en ce que l'autre moyen (99) pour le déplacement de l'éjecteur (91) est muni d'un autre piston mobile (101) situé dans un autre enfoncement cylindrique prévu dans le piston (95) pour le déplacement du poinçon (81).
